# EUROPEAN PATENT APPLICATION

(11) **EP 4 534 365 A1**
(43) Date of publication of application: **09.04.2025**
(21) Application number: 23201985.1
(22) Date of filing: 05.10.2023
(51) Int. Cl.: B60S 1/04

(54) **SUPPORT BEARING FOR A COMPONENT OF A WIPER SYSTEM OF A MOTOR VEHICLE**

(71) Applicant: Valeo Systèmes d'Essuyage, 78322 Le Mesnil Saint Denis (FR)
(72) Inventor: SPIECHA, Antoni, 32 050 SKAWINA (PL)
(74) Representative: Valeo Visibility

(57) **Abstract**

The present invention relates to a support bearing (6) for a member of a wiper system intended to be installed on a motor vehicle, comprising a fixing portion (40) configured to receive a screw fastening means (48 ) of the support bearing (6) on a body of the vehicle, characterized in that the fixing portion (40) comprises a housing zone (44) of the fastening means (48) which comprises a hole for passing screws (68 ) centered on a fastening axis (52), the fixing portion further comprising an elastic retaining means (46) adapted to assume at least a first position, in which it blocks the fastening means (48) axially against the portion fastening means (40), and a second position, in which it is retracted to leave a passage for the axial movement of the fastening means (48) relative to the fixing portion.

## Description

The present invention relates to the field of wiper systems on a vehicle and relates more particularly to a system for fixing a wiper system to the vehicle.

In general, a wiper system for a motor vehicle comprises an arm, driven in rotation by a motorized system and intended to perform an angular to-and-fro movement along a glazed surface to be wiped, and a wiper blade mounted at a free end of the arm and comprising a wiper strip. This wiper blade is intended to be in contact with the glazed surface of the vehicle and, driven by the angular to-and-fro movement of the arm, will wipe and/or clean the glazed surface in the event of bad weather or washing of said glazed surface, in order to ensure a clear view for the driver of the vehicle.

The wiper system is secured to the vehicle via a set of support bearings for members of the wiper system, including a support bearing for a drive shaft of a wiper blade and a support bearing for a drive motor of the wiper system. The support bearings are fixed to the body of the vehicle via fastening assemblies comprising respectively at least one screw, the tightening of which in a threaded hole on the body ensures the fixing of the support bearing. The fastening assemblies also comprise a washer making it possible to distribute the tightening force and a damping device, through which the screw passes and which is interposed between the washer and the body to attenuate the vibrations transmitted to the wiper system.

On current production lines, the wiper system, with the damping device which is previously secured to the bearing and to a fixing portion of the latter, is first placed on the vehicle so that the damping device is positioned opposite a threaded hole on the body. The fixing of the wiper system is carried out in a second step. The operator fixes the wiper system by recovering a screw and a washer, placed next to him, which are associated with the damping device.

The fact of having to add the screw and the washer a posteriori induces an increase in the mounting time of the wiper system on the motor vehicle and imposes non-ergonomic manipulations for the operator.

Another drawback to the known design and to the resulting assembly method is that the position of the wiper system relative to the body is likely to be modified during the movement of the vehicles on the production lines between installation and fixing of the wiper system.

It is thus necessary to hold the wiper system in position before its final fixing to avoid a manufacturing defect of the vehicle, and it is advantageous in this context to use centering devices. In particular, it is known to modify the cylindrical shape of the damping devices of the damping device to generate a centering finger forming a projection on the periphery of the damping device. The modification of the shape of the damper involves an additional cost in the design and requires above all to position the damping device correctly in the fixing portion of the support bearing to be certain that the centering pin will cooperate with a hole provided for this purpose, on the crate.

The present invention exists in this dual context by proposing a support bearing for a member of a wiper system intended to be installed on a motor vehicle, comprising a fixing portion configured to receive a fastening means comprising a screw for fixing the support bearing to a body of the vehicle, characterized in that the fixing portion comprises a housing zone for the fastening means comprising a screw passage orifice centered on a fastening axis, the fixing portion further comprising an elastic retaining means able to assume at least a first, blocking position, in which it blocks the fastening means axially against the fixing portion, and a second, retracted position, in which it is retracted to leave a passage for the axial movement of the fastening means with respect to the fixing portion.

The support bearing according to the invention is configured to allow axial locking of the fastening means, by the elastic retaining means permanently present on the support bearing. The screw of the fastening means comprises a free end without a thread, the diameter of which is substantially less than the rest of the shank of the screw and which can in this way serve as a centering means in association with a threaded fixing hole present on the body. of the vehicle. The elastic retaining means makes it possible to ensure that the screw does not escape from the support bearing and plays its role of centering until an operator carries out a screwing operation during which the position of the bearing support is fixed in relation to the body. The support bearing according to the invention thus makes it possible to leave the fixing screw permanently on the bearing during the assembly operation of the wiper system on the vehicle and thus makes it possible to use the fixing screw as a centering device for the wiper system.

The housing zone includes an orifice suitable for the screw of the fastening means to pass through, and this orifice is formed around an axis which is parallel to the fastening axis of the screw. By axially, in particular in the concept of axial blocking, it is appropriate to understand an orientation parallel to the axis of the orifice of the housing zone and to the fastening axis of the screw.

The first, blocking position of the elastic retaining means represents the position in the absence of force exerted thereon, that is to say the state at rest of the elastic retaining means. This rest position of the elastic retaining means is unchanged if no force is emitted thereon, either by the operator to allow the fastening means to be released, if necessary, in particular if dismantling and replacement of the fastening means is necessary, or by the fastening means when the latter must take place against the bearing in a pre-assembly position. The elastic retaining means is configured to assume its second, retracted position, in which it can leave the axial passage to the fastening means so that the latter comes against the fixing portion of the bearing, under the effect of a stress exerted by the passage of the fastening means itself.

According to the invention, once the fastening means is in position against the fixing portion of the bearing and the elastic retaining means returned to the original position, it is understood that the force exerted on the elastic retaining means by the means of fixing does not allow the elastic retaining means to return to the second, retracted position, so that the fastening means is blocked axially against the fixing portion of the bearing.

According to an optional characteristic of the invention, the elastic retaining means is disposed on a periphery of the housing zone.

The housing zone may have the shape of a notched cylinder emerging radially on an outer edge of the fixing portion. Alternatively, the housing zone may have a closed and continuous periphery thus forming a hole in the fixing portion. In each of these cases, the elastic retaining means is arranged on the fixing portion closest to the housing zone, so that a part of the elastic retaining means can extend, in its rest position, partially overlapping the housing zone. In this way, the elastic retaining means can form an axial abutment against the disengagement of the fastening means from the housing zone once the fastening means is in said housing zone.

According to an optional characteristic of the invention, the elastic retaining means comprises a first rectilinear portion which extends axially projecting from the fixing portion, in the vicinity of the housing zone, a curved portion which extends the first rectilinear portion and a second rectilinear portion which extends the curved portion towards the fixing portion and towards the inside of the housing zone, the second rectilinear portion extending in partial overlap of the housing zone.

According to an optional characteristic of the invention, the curved portion is arranged so that in the rest position, the second rectilinear portion of the elastic retaining means extends along a main direction of elongation inclined at an angle between 25° and 50° relative to a main direction of elongation of the first rectilinear portion of the elastic retaining means.

Such an inclination allows the second rectilinear portion of the elastic retaining means to partially overlap the housing zone when the elastic retaining means is in its first position, so as to reduce the section of passage through the housing zone, and to prevent this second rectilinear portion from being close to a position perpendicular to the fastening axis which could weaken the elastic retaining means under the effect of axial forces exerted by the fastening means.

According to an optional characteristic of the invention, the housing zone comprises a retaining wall for the fastening means, the retaining wall being perpendicular to the fastening axis.

According to an optional characteristic of the invention, the retaining wall comprises a notch in axial alignment with the elastic retaining means.

The invention also relates to a support assembly for a member of a wiper system comprising a support bearing as described above and which further comprises a damper block and the fastening means.

According to an optional characteristic of the invention, the fastening means comprises a screw and a washer, the elastic retaining means being opposite the washer when assuming the first position.

In this configuration, it is the contact of the second rectilinear portion of the elastic retaining means, when the latter is in the rest position, with the washer which makes it possible to block the axial movement of the fastening means in the support bearing and to thus ensuring that the fixing screw remains permanently on the support bearing in a pre-assembled position, until an operator uses this screw to fix the bearing to the body. Thus, before being screwed, the washer and the fixing screw are locked between the damper block and the second rectilinear portion of the elastic retaining means.

According to an optional characteristic of the invention, the damper block has a cylindrical shape.

More particularly, the periphery of the damper block has a shape of revolution, with a regular profile which does not have any protruding element. The centering of the fixing bearing is not achieved by such an element forming a projection of the damper block. As mentioned, this centering can be carried out by the free end of the screw of the screw fastening means.

According to an optional characteristic of the invention, the damper block comprises a groove configured to cooperate with the retaining wall of the housing zone.

According to an optional characteristic of the invention, at least one axial end face of the damper block has a peripheral edge delimiting a reception zone for receiving the washer.

According to an optional characteristic of the invention, the washer has a height greater than that of the peripheral edge of the reception zone. The height is measured parallel to the direction of the fastening axis. In other words, the washer protrudes axially from the fixing portion and this difference in height allows the elastic retaining means to be in contact only with the washer.

The invention also relates to a method for pre-assembling a support bearing as mentioned above, during which the fastening means with screw is held axially in the housing zone on the support bearing via the elastic retaining means in a rest position, the method comprising a step of inserting the fastening means with screw into the housing zone during which the elastic retaining means is deformed to allow the fastening means to pass through the housing zone.

According to an optional characteristic of the invention, after having carried out the insertion of the screw fastening means in the housing zone and once the elastic retaining means has returned to a rest position allowing the axial locking of the screw fastening means, the free end of the fixing screw acts as centering means in a threaded hole intended to be used for the fixing of the support bearing to the body.

According to an optional characteristic of the invention, the method comprises a subsequent fixing step during which an operator secures the support bearing to the body of the vehicle by means of the fixing screw which remains permanently on the support bearing thanks to the elastic retaining means of the support bearing according to the invention.

According to an optional characteristic of the invention, the step of inserting the fastening means with screw into the housing zone comprises a sub-step of inserting a damper block into the housing zone and a sub-step of insertion of the fixing screw, and where appropriate an associated washer, in the damper block during which the elastic retaining means is deformed as the fixing screw passes.

According to an optional characteristic of the invention, the sub-step of inserting the damper block is done by a translation in a first direction, perpendicular to the direction of the fastening axis, and the sub-step of inserting at least the fixing screw is made by a translation in a second direction, parallel to the direction of the fastening axis.

Other characteristics and advantages of the invention will become apparent through the description which follows on the one hand, and several embodiments given by way of indication and not limiting with reference to the appended diagrammatic drawings on the other hand, on which :
[fig 1] illustrates a wiper system suitable for equipping a motor vehicle and comprising a support bearing according to the invention;
[fig 2] is a detail view of a support bearing according to the invention fitted to the wiper system of figure 1;
[fig 3] is a sectional view of the fixing portion and of the fastening system of figure 1; and
[fig 4] is a detail view of the fixing portion of the fastening system of figure 1.

As a reminder, the invention relates to a support bearing for a member of a motor vehicle wiper system which is particular in that it comprises a screw passage orifice centered on a fastening axis and an elastic retaining means arranged next to this screw passage orifice to maintain a screw in the pre-assembled position, ready to be screwed in, by axial locking of the screw against the bearing when the screw is not yet engaged in a threaded hole of the vehicle body.

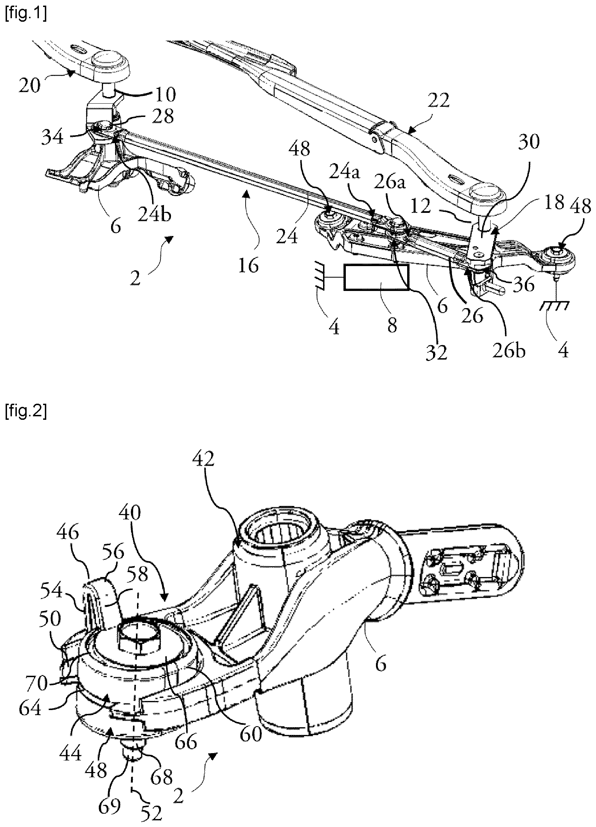

Figure 1 shows a wiper system 2 for actuating the wiper blades of a car. When mounted in a motor vehicle, the system is typically fixed to the frame 4 of the vehicle by different support bearings 6 for members of the wiper system.

A first support bearing is associated with an electric motor 8 and other support bearings 6 are associated with drive shafts of the wiper blades, which are driven in rotation following the rotation of a shaft output 14 of the electric motor 8, via appropriate linkage subsystems. More particularly, in the example illustrated, the motor output shaft 14 is configured to actuate a first subsystem 16 which includes a first blade and a second subsystem 18 which includes a second blade. Each subsystem 16, 18 includes an arm 20, 22 for actuating the blades.

As illustrated, a first linkage subsystem 16 comprised a first connecting rod 24 and a first crank 28 and a second linkage subsystem 18 comprised a second connecting rod 26 and a second crank 30.

A first longitudinal end 24a, 26a of the connecting rod 24, 26 of a linkage subsystem 16, 18 is hinged to the output shaft of the electric gear motor 8 by a first ball-joint assembly 3 2 and a second longitudinal end 26b, 28b is hinged to a first end of the crank 28, 30 of the said linkage subsystem by a second ball-joint assembly 34, 36.

The second end of the crank 28, 30 is integrally connected in rotation with the drive shaft of the corresponding windshield wiper.

The wiper system is fixed to the body of the vehicle, close to the glazed surface that the wiper system must clean, via fastening means at the level of the bearings supporting the members of the wiper system.

As mentioned above, the invention relates to a support bearing 6 which is fixed to the body of the vehicle by means of a fastening means with screw formed of a sub-assembly comprising a damper block, a screw and a washer, this sub-assembly being blocked axially by an elastic retaining means to prevent it from escaping from the support bearing before it is fixed to the body. Such a layout has the advantage of being able to leave the screw permanently and form a sub-assembly which remains in place throughout the displacement of the vehicle along the production line, and thus of being able to use the screw as a centering device when the wiper system is not yet screwed in on the body to avoid any movement or misalignment of the wiper system when it is fitted, without it being necessary to provide an additional centering device.

The invention thus relates to a particular form of a support bearing of a wiper system member and it will be described in more detail in the following figures with reference to one of the support bearings of a drive shaft of a wiper blade, but it should be noted that the invention could be implemented on either of the wiper drive shaft support bearings and/or on the support bearing associated with the engine output shaft.

Figure 2 illustrates in more detail the support bearing 6 of the wiper system 2.

The support bearing 6 comprises a fixing portion 40 and a receiving portion 42, the latter being configured to receive the drive shaft of a wiper blade of the wiper system.

The fixing portion 40 extends radially projecting from the receiving portion. It comprises a housing zone 44 configured to receive the fastening means 48 with screw which is intended to ensure the fixing of the bearing on the body and therefore the fixing of the wiper system. The housing zone 44 is located at the end of the fixing portion which is opposite the receiving portion 42. The housing zone 44 has an orifice arranged around a substantially vertical axis, which can be considered as a fastening axis 52 of the bearing on the body.

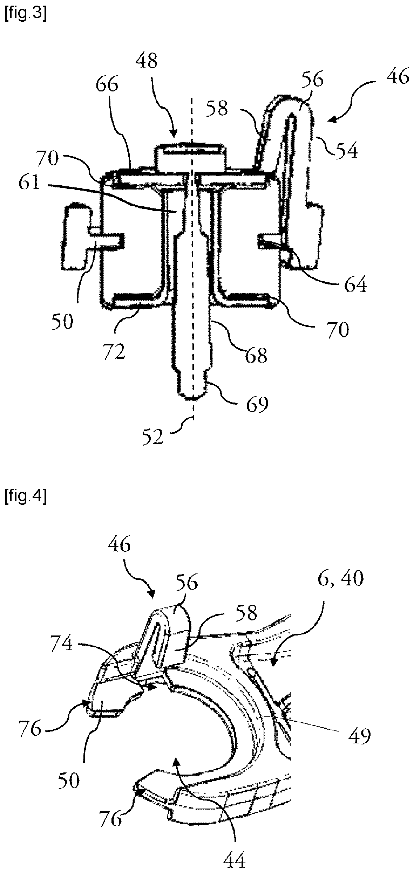

The housing zone 44 is here open on an outer edge of the fixing portion 40, thus forming a U-shape. As can be seen in particular in FIG. 4, the edges delimiting the opening of the housing zone on a outer edge of the fixing portion are curved to reduce the angled opening on the outer edge of the fixing portion relative to the opening at the center of the hole. Such a configuration makes it possible to simplify the assembly of the fastening means 48 in the housing zone, by allowing the introduction of components of this fastening means with screw through the opening on the outer edge, and by ensuring a retention of these components by the curved edges.

Alternatively, the housing zone 44 is formed by an orifice with a closed periphery, which does not open onto an edge of the fixing portion. The fastening means is then mounted by force with a mounting direction substantially parallel to the direction of the fastening axis 52 mentioned above.

The housing zone 44 consists of a recessed part in the thickness of the fixing portion 40, which emerges axially on each side of this fixing portion. The recessed part forming the housing zone 44 is delimited by a peripheral edge 49 which defines the circular shape of the housing zone. The housing zone also comprises a retaining wall 50 which forms a projection from the peripheral edge, substantially halfway up the latter and perpendicular to the fastening axis 52. In other words, the retaining wall 50 reduces the axial passage section through the orifice forming the housing zone. In the example illustrated, the retaining wall 50 separates the housing zone 44 into two substantially equal parts.

The fixing portion 40 comprises an elastic retaining means 46 which is configured to be able to press the fastening means against the support bearing once the fastening means has been positioned in the housing zone. For this purpose, the elastic retaining means 46 is arranged in the vicinity of the peripheral edge delimiting the housing zone. The elastic retaining means 46 comprises an axial abutment means capable of coming into overlap with the fastening means 48 and blocking the latter against the fixing portion 40, and it is configured to deform elastically during the insertion of components of the fastening means 48 in the housing zone and return to an original position in which it blocks the fastening means with screw 48 as previously mentioned.

In the example illustrated, the elastic retaining means 46 comprises a first rectilinear portion 54 which extends axially projecting from the fixing portion 40, in the vicinity of the peripheral edge of the housing zone 44, as well as a curved portion 56, which extends the first rectilinear portion 54, and a second rectilinear portion 58 which extends the curved portion 56 towards the fixing portion 40 and towards the inside of the housing zone 44, the second rectilinear portion 58 extending partially overlapping the housing zone 44.

The curved portion 56 allows the elastic retaining means 46 a flexibility making it possible to modify the angle of the second rectilinear portion 58 with respect to the first rectilinear portion 54, while remaining within the domain of the elastic deformation. The curved portion 56 makes it possible to bring the second rectilinear portion 58 closer to the first rectilinear portion 54 to allow the fastening means 48 to pass in the direction of the housing zone 44. This deformation is carried out under the effect of pressure exerted by the fastening means with screw and, where appropriate, by a washer forming part of the fastening means. The shape and the material of the elastic retaining means allow an elastic return force which tends to bring the elastic retaining means back to its rest position, which is effective when the fastening means is in position in the housing zone.

The support bearing 6 of a blade drive shaft forms with the previously mentioned fastening means 48 a support assembly, here of a wiper blade drive shaft.

The fastening means with screw 48 here comprises, in addition to a fixing screw 68, a damper block 60 and a washer 66.

The damper block 60 is cylindrical around an axis of revolution coinciding with the fastening axis mentioned above. The damper block has at its center an axial bore 61, passing through the damper block from one axial end face, or lower axial end face, to an opposite axial end face, or upper axial end face. The damper block 60 has a regular shape over its entire periphery, that is to say it does not have elements forming a projection from the periphery of the damper block 60. The damper block comprises a groove 64 arranged over the entire circumference of the damper block, forming a radial hollow in the thickness of the damper block and located between the lower axial end face and the upper axial end face of the damper block 60. Here, the groove 64 extends equidistant from each of the axial end faces.

The groove 64 of the damper block 60 is configured to interact with the retaining wall 50. The latter is housed in the groove when the damper block 60 is embedded in the fixing portion 40, which makes it possible to block the axial movement of the damper block along the fastening axis 52 once the damper block in position.

The groove 64 forms a guide rail for the insertion of the damper block in the fixing portion 40, via the edge of the fixing portion. In the previously mentioned alternative where the housing zone is formed by a closed orifice, the damper block 60 must be force-fitted in the hole of the housing zone 44 in order to fit the retaining wall 50 into the groove 64.

The washer 66 is configured to be placed against the upper axial end face of the damper block, and in particular in a reception zone 70 formed for this purpose. The fixing screw 68, the washer 66 and the damper block 60 form a sub-assembly which can remain permanently on the fixing portion 40 of the support bearing before it participates in the fixing of the support bearing to the body of the vehicle. In particular, the damper block 60 is held in position in the housing zone 44, and the sub-assembly is held axially by the elastic retaining means 46.

More particularly, in the example illustrated, the second rectilinear portion 58 of the elastic retaining means 46 retains the washer 66 axially, by keeping it pressed against the upper axial end face of the damper block 60. And as can be seen in FIG. 3, the washer 66 is locked in position on the rod of the fixing screw 68, so that the elastic retaining means participates in also holding the fixing screw 68 axially.

The first step of pre-assembling a support assembly as just presented, with the support bearing 6, the damper block 60, the fixing screw 68 and the washer 66, consists in inserting the damper block 60 in the support bearing 6. As mentioned, the damper block 60 is forcibly inserted into the housing zone 44 so as to fit the retaining wall 50 in the housing zone 44 in the groove 64 of the damper block 60.

The second pre-assembly step consists in associating the fastening means 48, that is to say the washer 66 and the fixing screw 68, and the damper block 60 already in place on the support bearing 6, in particular by inserting the fixing screw 68 in the axial bore of the damper block 60. This insertion here implies that the washer 66 comes into contact with the elastic retaining means 46 and in particular with the second rectilinear portion 58. The inclined shape of this second rectilinear portion 58 makes it possible to slide the washer while ensuring a transverse force on the elastic retaining means.

The insertion of the fixing screw 68 into the axial bore involves an effort to deform radially the elastic retaining means 46 and move it into its second position, pressing the second rectilinear portion 58 against the first rectilinear portion 54. The insertion continues until the washer 66 is housed in the reception zone 70 of the damper block 60. In this position, the washer 66 is no longer in contact with the curved portion 56 of the elastic retaining means and the latter can resume its first position, ie its rest position.

The second rectilinear portion 58 of the elastic retaining means 46 is then partially overlapping the washer 66, arranged in the reception zone 70. This second rectilinear portion 58 forms an axial abutment when the washer is disengaged, said washer thus remaining pressed against the fixing portion 40 in the reception zone 70.

At the end of this second pre-assembly step, the free end of the rod of the fixing screw 68 protrudes from the damper block opposite the washer and the elastic retaining means 46. This free end forms a centering pin, which allows the support bearing to be reliably positioned on the body of the vehicle prior to its fixing by screwing.

FIG. 3 illustrates, in a sectional view, the axial blocking of the fastening means with screw by the elastic retaining means when the latter has returned to its rest position and the fastening means with screw is pressed against the fixing portion, here with the washer housed in the reception zone 70 arranged in the upper axial end face.

In the example illustrated in FIG. 3, the damper block 60 is symmetrical and has a reception zone 70 on each axial end face, so that it can be mounted in the housing zone 44 in both directions.

As mentioned, one of the reception zones 70, here that formed in the upper axial end face of the damper block 60, is configured to receive the washer 66 of the fastening means 48. For this purpose, the washer 66 of the fastening means 48 has a diameter smaller than that of the reception zone 70, so as to be able to be housed between the peripheral edge delimiting the cavity forming the reception zone 70. Furthermore, the washer 66 of the fastening means 48 has a thickness, that is to say a dimension measured parallel to the fastening axis, such that it protrudes at least slightly from the plane comprising the free end of the peripheral edge delimiting the cavity forming the reception zone 70. More particularly, the thickness of the washer is substantially equal to the axial distance between the bottom of the reception zone 70 and the free end of the second rectilinear portion 58 of the elastic retaining means 46 when the latter is at rest. Thus, it is ensured that the second rectilinear portion 58 of the elastic retaining means 46 is in contact with the washer 66 when the elastic retaining means is in the rest position.

The other reception zone 70 of the damper block 60 is here capable of receiving a plate 72 of an insert which also extends into the axial bore 61 of the damper block and which aims to stiffen the damper block to improve its radial holding in the housing zone.

Between these two reception zones, the groove 64 of the damper block 60 is dimensioned so that the bottom wall is arranged circularly with a diameter substantially equal to the inside diameter of the housing zone at the level of the retaining wall 50. This results in a limitation of the radial movement of the damper block with respect to the housing zone 44.

Figure 3 also shows the free end 69 of the rod of the fixing screw 68, as it is positioned at the end of the second step of the pre-assembly process mentioned above. The free end 69 protrudes from the damper block 60 opposite the washer 66 and the elastic retaining means 46, so as to form a centering pin on the body of the vehicle.

It should be noted that when mounting the wiper system 2 on the car, once the bearing is positioned correctly, in particular thanks to the free end 69 of the fixing screw 68 serving as a centering pin and thanks to the elastic retaining means 46 which axially holds this fixing screw and ensures the cooperation of the free end in the corresponding centering hole present on the body, the bearing is secured to the body of the vehicle by tightening the fixing screw. This tightening generates an axial pressure on the washer 66 which in turn compresses the damper block 60, so that the damper block can become thinner and the second rectilinear portion 58 of the elastic retaining means 46, in its position rest, is then no longer in contact with the washer 66, but continues to extend facing this washer, partially covering the fastening means.

FIG. 4 illustrates the housing zone 44 of the support bearing 6, without the fastening means 48 and the damper block 60, in order to make the elastic retaining means 46 more particularly visible and an arrangement in the retaining wall in line with this elastic retaining means.

More particularly, the retaining wall 50 has a notch 74 disposed axially in line with the curved portion 56 and the second rectilinear portion 58 of the elastic retaining means 46. This notch 74 is provided to allow molding and demolding of the elastic retaining means 46 on the support bearing 6.

In particular, the notch makes it possible to position, and to remove once the molding operation has been carried out, a drawer allowing the separation of the first rectilinear portion and the second rectilinear portion and making it possible to generate the internal curvature of the curved portion.

The retaining wall 50 is planar and substantially parallel to the main plane of the fixing portion 40. As mentioned, in the illustrated embodiment, the retaining wall is interrupted to form an opening on an edge of the fixing portion of the bearing and allow the insertion of the damper block. Figure 4 shows that the retaining wall 50 here has two return edges 76 opposite one another to angularly delimit this opening. The angular opening thus generated is sized so that the damper block must be mounted by force in order to then position itself in the housing zone 44. These two return edges 76 participate in radially blocking the damper block 60 in the housing zone 44 in the pre-assembly position, before the fixing screw makes it possible to finalize the fixing on the bearing.

The invention, as it has just been described, successfully achieves the aim it had set itself, by proposing a support bearing for a member of a wiper system which facilitates assembly operations on the body, ensuring that the fastening means used for fixing to the body are pre-assembled, ensuring that this pre-assembly position is viable and that the fastening means cannot be lost before they are used by the operator, and allowing a centering function to be performed by means of these fastening means. Variants not described here could be implemented without departing from the context of the invention, since, in accordance with the invention, they comprise an elastic retaining means in accordance with the invention.

## Claims

1. Support bearing (6) for a member of a wiper system intended to be installed on a motor vehicle, comprising a fixing portion (40) configured to receive a fastening means (48) comprising a screw for fixing the support bearing (6) to a body of the vehicle, **characterized in that** the fixing portion (40) comprises a housing zone (44) for the fastening means (48) comprising a screw passage orifice centered on a fastening axis (52), the fixing portion (40) further comprising an elastic retaining means (46) able to assume at least a first, blocking position, in which it blocks the fastening means (48) axially against the fixing portion (40), and a second, retracted position, in which it is retracted to leave a passage for the axial movement of the fastening means (48) with respect to the fixing portion.

2. Support bearing (6) according to Claim 1, wherein the elastic retaining means (46) is disposed on a periphery of the housing zone (44).

3. Support bearing (6) according to Claim 1 or 2, wherein the elastic retaining means (46) comprises a first rectilinear portion (54) which extends axially projecting from the fixing portion (40), in the vicinity of the housing zone (44), a curved portion (56) which extends the first rectilinear portion (54) and a second rectilinear portion (58) which extends the curved portion (56) towards the fixing portion (40) and towards the inside of the housing zone (44), the second rectilinear portion (58) extending in partial overlap of the housing zone (44).

4. Support bearing (6) according to any of the preceding claims, wherein the housing zone (44) comprises a retaining wall (50) for the fastening means (48), the retaining wall (50) being perpendicular to the fastening axis (52).

5. Support bearing (6) according to claim 4, wherein the retaining wall (50) comprises a notch (74) in axial alignment with the elastic retaining means (46).

6. A support assembly for a member of a wiper system comprising a support bearing (6) and a fastening means (48) according to one of the preceding claims, further comprising a damper block (60).

7. Support assembly for a drive shaft according to the preceding claim, wherein the fastening means (48) comprises a screw (68) and a washer (66), the elastic retaining means (46) being opposite the washer (66) when assuming the first position.

8. Support assembly according to claim 6 or 7, wherein the damper block (60) has a cylindrical shape.

9. Support assembly according to one of claims 6 to 8, in combination with claim 4 or 5, wherein the damper block (60) includes a groove (64) configured to cooperate with the retaining wall (50) of the housing zone (44).

10. Support assembly according to one of claims 6 to 9, wherein at least one axial end face of the damper block (60) has a peripheral edge delimiting a reception zone (70) for receiving the washer (66).

11. Support assembly according to the preceding claim, wherein the washer (66) has a height greater than that of the peripheral edge of the reception zone (70).

12. A method of pre-assembling a support bearing (6) according to any one of claims 1 to 6, during which the fastening means (48) with screw is held axially in the housing zone (44) on the support bearing (6) via the elastic retaining means (46) in a rest position, the method comprising a step of inserting the fastening means (48) with screw into the housing zone (44) during which the elastic retaining means (46) is deformed to allow the fastening means (48) to pass through the housing zone (44).
